(19) **Europäisches Patentamt / European Patent Office / Office européen des brevets**

(11) **EP 4 700 722 A1**

(12) # EUROPEAN PATENT APPLICATION
published in accordance with Art. 153(4) EPC

(43) Date of publication:
**25.02.2026 Bulletin 2026/09**

(21) Application number: **24814262.2**

(22) Date of filing: **22.05.2024**

(51) International Patent Classification (IPC):
**G06V 30/146** (2022.01)

(86) International application number:
**PCT/CN2024/094632**

(87) International publication number:
**WO 2024/245063 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023 CN 202310612909**

(71) Applicant: **Huawei Technologies Co., Ltd.**
**Shenzhen, Guangdong 518129 (CN)**

(72) Inventors:
• **XIE, Enze**
  **Shenzhen, Guangdong 518129 (CN)**
• **CHEN, Kai**
  **Shenzhen, Guangdong 518129 (CN)**
• **HONG, Lanqing**
  **Shenzhen, Guangdong 518129 (CN)**
• **LI, Zhenguo**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) ## DATA PROCESSING METHOD AND APPARATUS

(57) A data processing method, which is applied to the artificial intelligence field, includes: obtaining a first image and text information, where the text information indicates a location constraint of at least one object in an image, and the first image is an image obtained by performing noise addition using a noise addition module in a diffusion model; processing the text information based on a text encoder to obtain a first feature representation; and obtaining a second image based on a fusion result of the first image and the first feature representation by using a denoising model in the diffusion model, where an object included in the second image meets the location constraint indicated by the text information.

Obtain a first image and text information, where the text information indicates a location constraint of at least one object in the image, and the first image is an image obtained by performing noise addition on an original image using a noise addition module in a diffusion model — 501

Process the text information based on a text encoder to obtain a first feature representation — 502

Obtain a second image based on a fusion result of the first image and the first feature representation using an image generator in the diffusion model — 503

Determine a loss based on the second image and the original image, and update the text encoder and a denoising model based on the loss — 504

FIG. 5

EP 4 700 722 A1

## Description

This application claims priority to Chinese Patent Application No. 202310612909.1, filed with the China National Intellectual Property Administration on May 26, 2023 and entitled "DATA PROCESSING METHOD AND APPARATUS", which is incorporated herein by reference in its entirety.

## TECHNICAL FIELD

This application relates to the artificial intelligence field, and in particular, to a data processing method and apparatus.

## BACKGROUND

Artificial intelligence (Artificial Intelligence, AI) is a theory, a method, a technology, or an application system that simulates, extends, and expands human intelligence by using digital computers or machines controlled by digital computers, to perceive environments, obtain knowledge, and achieve optimal results based on the knowledge. In other words, AI is a branch of computer science that seeks to understand the essence of intelligence and to create a new kind of intelligent machine able to respond in ways similar to human intelligence. AI research focuses on design principles and implementation methods of various intelligent machines, to enable the machines possess the functions of perception, inference, and decision-making.

In recent years, diffusion models have made significant progress and gained considerable attention in the generative field. Although probabilistic diffusion models have shown outstanding performance in content creation and have become some of the most popular generative models, they have some limitations in the application to data generation of perception tasks (such as object detection). Specifically, in data generation of complex perception tasks such as object detection and pose estimation, fine-grained geometric control, for example, control of a bounding box location, is required. However, existing diffusion models are not ideal in this regard, and struggle to accurately control geometric constraints of objects in generated images.

## SUMMARY

This application provides a data processing method, to obtain a more accurate image that meets a geometric constraint.

According to a first aspect, this application provides a data processing method. The method includes: obtaining a first image and text information, where the text information indicates a location constraint of at least one object in an image, and the first image is an image obtained by performing noise addition using a noise addition module in a diffusion model; processing the text information based on a text encoder to obtain a first feature representation; and obtaining a second image based on a fusion result of the first image and the first feature representation by using a denoising model in the diffusion model, where an object included in the second image meets the location constraint indicated by the text information.

In this embodiment of this application, a feature representation of text information indicating a location constraint of an object in a generated image and the image are input into an image generator together. Compared with a conventional technology in which only the first image is used as an input of the image generator, in this application, the image generator can more accurately obtain an image that meets a geometric constraint specified in the text information.

In addition, transferability of the text encoder is used, so that a specific conditional encoding network module does not need to be designed for a specific geometric condition, and therefore an entire framework has strong flexibility and scalability.

In a possible implementation, the first image is an image obtained by performing noise addition on an original image using the noise addition module in the diffusion model, the original image includes the at least one object, and the text information specifically includes a size of a detection box corresponding to each object in the original image and a location of the detection box in the original image.

In a possible implementation, the text information further includes: a category of image content in the detection box, or camera viewpoint information present when the first image is captured.

In a possible implementation, the object is a key point on a person for indicating a pose.

In a possible implementation, the fusion result is obtained by performing attention mechanism-based interaction on the first image and the first feature representation.

According to a second aspect, this application provides a data processing method. The method includes: obtaining a first image and text information, where the text information indicates a location constraint of at least one object in an image, and the first image is an image obtained by performing noise addition on an original image using a noise addition module in a diffusion model; processing the text information based on a text encoder to obtain a first feature representation; obtaining a second image based on a fusion result of the first image and the first feature representation using an image generator in the diffusion model; and determining a loss based on the second image and the original image, and updating the text encoder and a denoising model based on the loss.

In a possible implementation, the at least one object is located in a foreground region in the second image; and the determining the loss based on the second image and the original image includes: determining a first loss based on the foreground region of the second image and a foreground region of the original image; determining a second loss based on a background region of the second image and a background region of the original image; and fusing the first loss and the second loss through weighting to obtain the loss, where a weight corresponding to the first loss is greater than a weight corresponding to the second loss.

In a possible implementation, to alleviate an imbalance problem of a foreground region in a generated image, values of a loss corresponding to the foreground region and a loss corresponding to a background region may be controlled in a training process, to help the model pay more attention to generation of a foreground object, thereby improving generation effect of the foreground region.

In a possible implementation, the at least one object includes a first object and a second object; the first object is located in a first foreground region in the second image, and the second object is located in a second foreground region in the second image; and the determining the loss based on the second image and the original image includes: determining a first sub-loss based on the first foreground region and a foreground region that is in the original image and that corresponds to the first foreground region; determining a second sub-loss based on the second foreground region and a foreground region that is in the original image and that corresponds to the second foreground region; and fusing the first sub-loss and the second sub-loss through weighting to obtain the first loss, where the first loss is a part of the loss, an area of the first foreground region is greater than that of the second foreground region, and a weight corresponding to the first sub-loss is less than a weight corresponding to the second foreground region.

In a possible implementation, to alleviate an imbalance problem of the foreground region in the generated image, values of a loss corresponding to a small-area object (or referred to as a small object) in the foreground region and a loss corresponding to a large-area object in the foreground region may be controlled in the training process, to improve generation effect of the small-area object.

In a possible implementation, the first image is the image obtained by performing noise addition on the original image using the noise addition module in the diffusion model, the original image includes the at least one object, and the text information specifically includes a size of a detection box corresponding to each object in the original image and a location of the detection box in the original image.

In a possible implementation, the text information further includes: a category of image content in the detection box, or camera viewpoint information present when the first image is captured.

In a possible implementation, the object is a key point on a person for indicating a pose.

In a possible implementation, the fusion result is obtained by performing attention mechanism-based interaction on the first image and the first feature representation.

According to a third aspect, this application provides a data processing apparatus. The apparatus includes:

an obtaining module, configured to obtain a first image and text information, where the text information indicates a location constraint of at least one object in an image, and the first image is an image obtained by performing noise addition using a noise addition module in a diffusion model; and

a processing module, configured to: process the text information based on a text encoder to obtain a first feature representation; and

obtain a second image based on a fusion result of the first image and the first feature representation by using a denoising model in the diffusion model, where an object included in the second image meets the location constraint indicated by the text information.

In a possible implementation, the first image is an image obtained by performing noise addition on an original image using the noise addition module in the diffusion model, the original image includes the at least one object, and the text information specifically includes a size of a detection box corresponding to each object in the original image and a location of the detection box in the original image.

In a possible implementation, the text information further includes: a category of image content in the detection box, or camera viewpoint information present when the first image is captured.

In a possible implementation, the object is a key point on a person for indicating a pose.

In a possible implementation, the fusion result is obtained by performing attention mechanism-based interaction on the first image and the first feature representation.

According to a fourth aspect, this application provides a data processing apparatus. The apparatus includes:

an obtaining module, configured to obtain a first image and text information, where the text information indicates a location constraint of at least one object in an image, and the first image is an image obtained by performing noise addition on an original image using a noise addition module in a diffusion model; and

a processing module, configured to: process the text information based on a text encoder to obtain a first feature representation;

obtain a second image based on a fusion result of the first image and the first feature representation using an image generator in the diffusion model; and

determine a loss based on the second image and the original image, and update the text encoder and a denoising model based on the loss.

In a possible implementation, the processing module is specifically configured to:

determine a first loss based on a foreground region of the second image and a foreground region of the original image;

determine a second loss based on a background region of the second image and a background region of the original image; and

fuse the first loss and the second loss through weighting to obtain the loss, where a weight corresponding to the first loss is greater than a weight corresponding to the second loss.

In a possible implementation, the at least one object includes a first object and a second object; the first object is located in a first foreground region in the second image, and the second object is located in a second foreground region in the second image; and the processing module is specifically configured to:

determine a first sub-loss based on the first foreground region and a foreground region that is in the original image and that corresponds to the first foreground region;

determine a second sub-loss based on the second foreground region and a foreground region that is in the original image and that corresponds to the second foreground region; and

fuse the first sub-loss and the second sub-loss through weighting to obtain the first loss, where the first loss is a part of the loss, an area of the first foreground region is greater than that of the second foreground region, and a weight corresponding to the first sub-loss is less than a weight corresponding to the second foreground region.

In a possible implementation, the first image is the image obtained by performing noise addition on the original image using the noise addition module in the diffusion model, the original image includes the at least one object, and the text information specifically includes a size of a detection box corresponding to each object in the original image and a location of the detection box in the original image.

In a possible implementation, the text information further includes: a category of image content in the detection box, or camera viewpoint information present when the first image is captured.

In a possible implementation, the object is a key point on a person for indicating a pose.

In a possible implementation, the fusion result is obtained by performing attention mechanism-based interaction on the first image and the first feature representation.

According to a fifth aspect, an embodiment of this application provides a training apparatus. The apparatus may include a memory, a processor, and a bus system. The memory is configured to store a program, and the processor is configured to execute the program in the memory, to perform the method according to any one of the first aspect and the optional implementations of the first aspect.

According to a sixth aspect, an embodiment of this application provides an execution apparatus. The apparatus may include a memory, a processor, and a bus system. The memory is configured to store a program, and the processor is configured to execute the program in the memory, to perform the method according to any one of the second aspect and the optional implementations of the second aspect.

According to a seventh aspect, an embodiment of this application provides a computer-readable storage medium. The computer-readable storage medium stores a computer program. When the computer program is run on a computer, the computer is caused to perform the method according to any one of the first aspect and the optional implementations of the first aspect and the method according to any one of the second aspect and the optional implementations of the second aspect.

According to an eighth aspect, an embodiment of this application provides a computer program. When the computer program is run on a computer, the computer is caused to perform the method according to any one of the first aspect and the optional implementations of the first aspect and the method according to any one of the second aspect and the optional implementations of the second aspect.

According to a ninth aspect, this application provides a chip system. The chip system includes a processor, configured to support a data processing apparatus in implementing functions in the foregoing aspects, for example, sending or processing data or information in the foregoing methods. In a possible design, the chip system further includes a memory. The memory is configured to store program instructions and data that are necessary for an execution device or a training device. The chip system may include a chip, or may include a chip and another discrete component.

## BRIEF DESCRIPTION OF DRAWINGS

FIG. 1A is a diagram of a structure of a main framework of artificial intelligence;
FIG. 1B and FIG. 1C are diagrams of application system frameworks according to the present invention;
FIG. 1D is a diagram of an optional hardware structure of a terminal;
FIG. 2 is a diagram of a structure of a server;
FIG. 3 is a diagram of a system architecture according to this application;
FIG. 4A shows a procedure of a cloud service;
FIG. 4B is a diagram of an application scenario;
FIG. 5 is a schematic flowchart of a data processing method according to an embodiment of this application;
FIG. 6 to FIG. 8 are diagrams of processing of a data processing method according to embodiments of this application;
FIG. 9A is a diagram of processing of a data processing method according to an embodiment of this application;
FIG. 9B is a diagram of beneficial effect according to an embodiment of this application;
FIG. 10 is a diagram of a structure of a data processing apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

## DESCRIPTION OF EMBODIMENTS

The following describes embodiments of the present invention with reference to accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may know that, with development of technologies and emergence of new scenarios, technical solutions provided in embodiments of this application are also applicable to similar technical problems.

In the specification, claims, and accompanying drawings of this application, terms "first", "second", and the like are intended to distinguish between similar objects, but do not necessarily indicate a specific order or sequence. It should be understood that the terms used in such a way may be interchangeable in proper circumstances, which is merely a distinguishing manner used when objects having a same attribute are described in embodiments of this application. In addition, terms "include", "have", and any variants thereof mean to cover the non-exclusive inclusion, so that a process, method, system, product, or device that includes a series of units is not necessarily limited to those units, but may include other units not expressly listed or inherent to the process, method, product, or device.

Terms "substantially (substantially)", "about (about)", and the like are used in this specification as approximate terms rather than degree terms, and are intended to take into account inherent deviations of measured values or calculated values that are known to a person of ordinary skill in the art. In addition, when embodiments of the present invention are described, "may (may)" is used to mean "one or more possible embodiments". Terms "use (use)", "using (using)", and "used (used)" used in this specification may be considered to be synonymous with terms "utilize (utilize)", "utilizing (utilizing)", and "utilized (utilized)" respectively. In addition, the term "example (exemplary)" is intended to mean an example or an illustration.

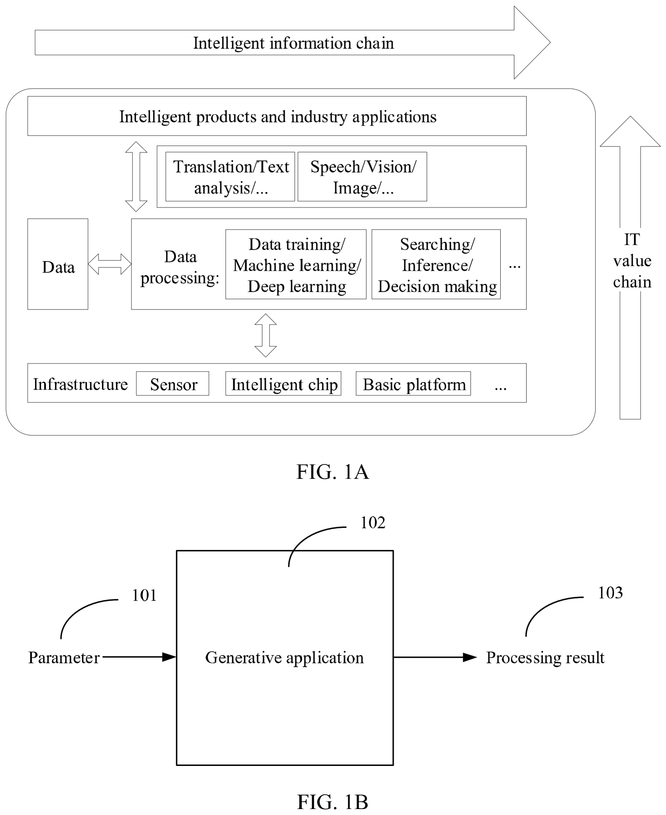

An overall working procedure of an artificial intelligence system is first described. FIG. 1A is a diagram of a structure of a main framework of artificial intelligence. The following describes the main framework of artificial intelligence from two perspectives: "intelligent information chain" (horizontal axis) and "IT value chain" (vertical axis). The "intelligent information chain" reflects a series of processes from obtaining data to processing the data. For example, the process may be a general process of intelligent information perception, intelligent information representation and formation, intelligent reasoning, intelligent decision-making, and intelligent execution and output. In this process, the data undergoes a refinement process of "data-information-knowledge-intelligence". The "IT value chain" reflects values brought by artificial intelligence to the information technology industry from an underlying infrastructure and information (provision and processing technology implementation) of artificial intelligence to an industrial ecological process of a system.

(1) Infrastructure

The infrastructure provides computational support for the artificial intelligence system, enables communication with the external world, and offers support by using a basic platform. The infrastructure communicates with the external world via sensors. Computing capabilities are provided by intelligent chips (hardware acceleration chips, for example, CPUs, NPUs, GPUs, ASICs, or FPGAs). The basic platform includes related platform assurance and support such as distributed computing frameworks and networks, and may include cloud storage and computing, interconnected networks, and the like. For example, the sensors communicate with the external world to obtain data, and the data is provided to intelligent chips for computing in a distributed computing system provided by the basic platform.

(2) Data

Data at an upper layer of the infrastructure indicates a data source in the artificial intelligence field. The data relates to graphs, images, speeches, and texts, and further relates to internet of things data of conventional devices. The data includes service data of existing systems and perception data such as force, displacement, liquid level, temperature, and humidity.

(3) Data processing

The data processing typically includes data training, machine learning, deep learning, searching, reasoning, decision making, and the like.
The machine learning and the deep learning enable symbolic and formal intelligent information modeling, extraction, preprocessing, training, and the like of data.
The reasoning is a process computers or intelligent systems that simulates human intelligent reasoning methods. Based on reasoning control policies, it utilizes formalized information to enable machine thinking and problem resolving, with typical functions including searching and matching.
The decision making is a process of making decisions by reasoning intelligent information, with functions including classification, ranking, prediction, and the like

(4) General capability

After data undergoes the aforementioned data processing, some general capabilities can be developed based on data processing results. For example, the general capabilities may be algorithms or general systems, for example, translation, text analysis, computer vision processing, speech recognition, and image recognition.

(5) Intelligent products and industry applications

The intelligent products and industry applications are products and applications of the artificial intelligence system in various fields, and are encapsulation for an overall artificial intelligence solution, so that decision making for intelligent information is productized and the applications are implemented. Application fields thereof mainly include an intelligent terminal, intelligent transportation, intelligent healthcare, autonomous driving, a smart city, and the like.
This application may be applied to the natural language processing field in the artificial intelligence field. The following uses natural language processing as an example to describe a plurality of application scenarios implemented in products.
Application scenarios of this application are first described. This application may be applied to, but not limited to, applications (which may be briefly referred to as generative applications below) having an image generation or natural language synthesis function or a cloud service provided by a cloud-side server. The following separately provides descriptions.

1. Generative application

In embodiments of this application, a product form may be a generative application. The generative application may run on terminal devices or cloud-side servers.
In a possible implementation, the generative application may implement image generation tasks to obtain processing results.
For example, the generative application may implement at least image generation tasks that are based on a diffusion method, but this is not limited thereto.
In a possible implementation, users may open the generative application installed on terminal devices, and input image data and text data (text may be triggered according to instructions, and may not be actively input by the users). The generative application may process images and text by using a model obtained through training according to a method provided in embodiments of this application, or process images and texts according to a method provided in embodiments of this application, and present processing results to the users (where the processing results may be presented in a manner including but not limited to displaying, playing, saving, or uploading to a cloud side).

In a possible implementation, users may open the generative application installed on terminal devices, and input image data and text data. The generative application may send the image data and the text data to the cloud-side server. The cloud-side server processes images or text by using a model obtained through training according to a method provided in embodiments of this application, and returns processing results to the terminal devices. The terminal device may present the processing result to the users (where the processing results may be presented in a manner including but not limited to displaying, playing, saving, or uploading to a cloud side).

For example, the image generation task may be specifically applied to, but not limited to, the following scenarios:

Scenario 1: Detection data generation in autonomous driving scenarios

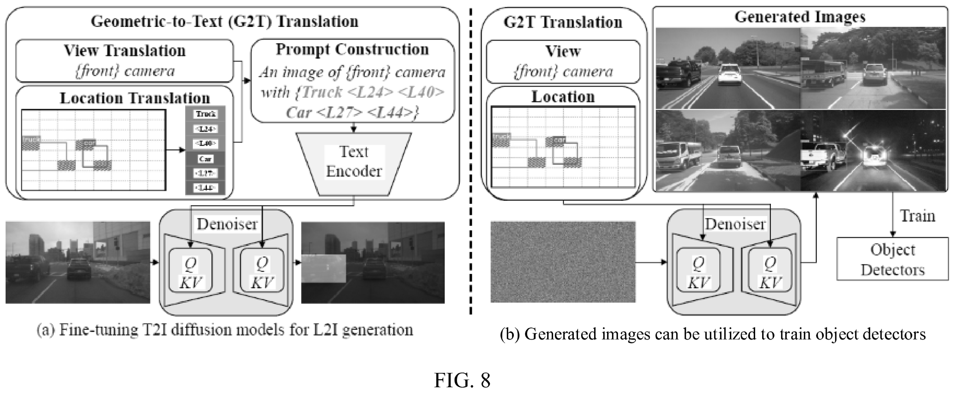

In a scenario of autonomous driving detection data generation, images with rich, real, and diversified traffic environments need to be generated. These images need to include various road types (such as city streets and highways), different weather conditions (such as sunny days, rainy days, and snowy days), a plurality of types of traffic participants (such as pedestrians, cyclists, cars, and trucks), and various traffic rules and signals (such as traffic lights, parking signs, and crosswalks). In addition, the generated images further need to consider various camera viewpoints and locations, to simulate a visual perception capability of an autonomous driving system under an actual road condition. As shown in FIG. 8, given a layout of an autonomous driving scenario in the lower left corner, a plurality of types of autonomous driving data with a same layout may be generated (as shown in the upper right corner of FIG. 8).

Scenario 2: Smart watch face data generation

In a scenario of smartphone face data generation, diversified, personalized, and highly authentic watch face elements need to be generated based on a specific watch face layout. These watch face elements include hands (hour, minute, and second) and information such as a day-of-week display, a date display, a step count, heart rate monitoring, and a battery level. In addition, a generated watch face further needs to consider various design styles, color schemes, and fonts, to meet a personalized requirement and an aesthetic preference of a user.

Scenario 3: AI model generation in an e-commerce scenario

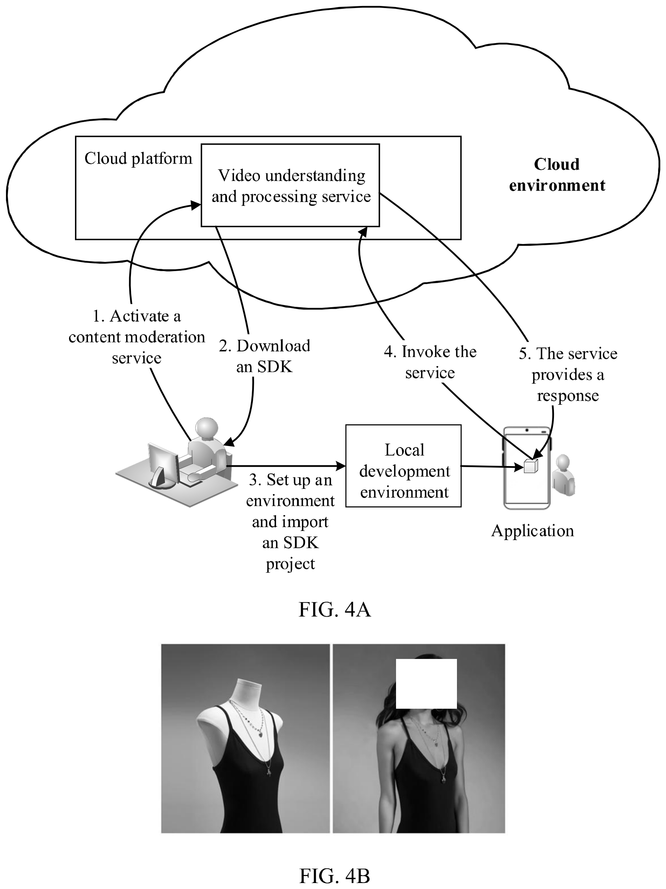

With reference to FIG. 4B, during AI model generation in the e-commerce scenario, diversified clothing combinations need to be generated based on input specified model styling, to be presented to potential consumers. First, a model needs to receive the model styling input by a user, for example, features such as a posture and a pose. Then, based on these features, a generation algorithm generates a series of clothing combinations that match the model styling. These combinations may include different types of tops, pants, skirts, jackets, shoes, and the like. In a generation process, the algorithm needs to consider styles, colors, patterns, and other details of clothing, and ensure that the generated combinations are visually attractive and authentic. In addition, to meet requirements of different consumers, the generated clothing combinations need be diversified, covering different styles, occasions, and seasons.

The following describes the generative applications in embodiments of this application separately from the perspectives of a functional architecture and a product architecture for function implementation.

FIG. 1B is a diagram of a functional architecture of a generative application according to an embodiment of this application.

In a possible implementation, as shown in FIG. 1B, the generative application 102 may receive an input parameter 101 (for example, including images or text) and generate a processing result 103. The generative application 102 may be executed on (for example) at least one computer system, and include computer code. When the computer code is executed by one or more computers, the computer is caused to execute a model obtained through training according to the method provided in embodiments of this application.

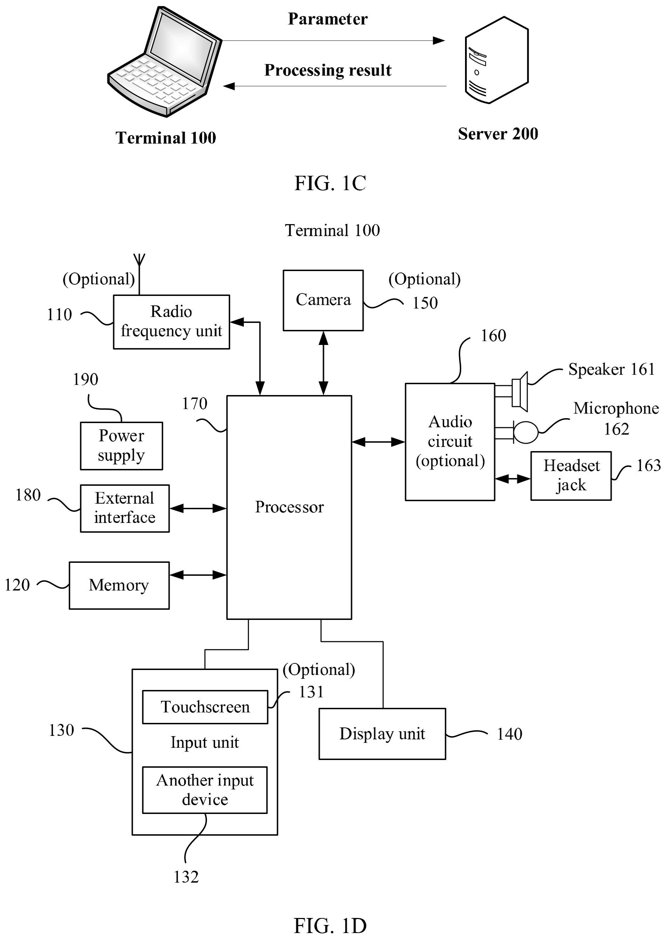

FIG. 1C is a diagram of an entity architecture for running a generative application according to an embodiment of this application.

FIG. 1C is a diagram of a system architecture. The system may include a terminal 100 and a server 200. The server 200 may include one or more servers (an example in which one server is included is used for description in FIG. 1C), and the server 200 may provide an image synthesis function or a natural language generation function for one or more terminals.

A generative application may be installed on the terminal 100, or a web page related to the image synthesis function or the natural language generation function may be opened on the terminal 100. The application or the web page may provide an interface. The terminal 100 may receive a related parameter input by a user on the interface of the image synthesis function or the natural language generation function, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter without a need to cooperate with the server. This is not limited in embodiments of this application.

The following describes a product form of the terminal 100 in FIG. 1C.

The terminal 100 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

FIG. 1D is a diagram of an optional hardware structure of the terminal 100.

With reference to FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 1D is merely an example of the terminal or a multi-function device and does not constitute a limitation on the terminal or the multi-function device. The terminal or the multi-function device may include more or fewer components than those shown in the figure, a combination of some components, or different components.

The input unit 130 may be configured to: receive input digital or character information, and generate a key signal input related to a user setting and function control of a portable multi-function apparatus. Specifically, the input unit 130 may include a touchscreen 131 (optional) and/or another input device 132. The touchscreen 131 may collect a touch operation performed by the user on or near the touchscreen 131 (for example, an operation performed by the user on or near the touchscreen by using any appropriate object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be of a plurality of types, such as a resistive type, a capacitive type, an infrared ray type, and a surface acoustic wave type. In addition to the touchscreen 131, the input unit 130 may include another input device. Specifically, the another input device 132 may include but is not limited to one or more of a physical keyboard, a functional button (for example, a volume control button or an on/off button), a trackball, a mouse, and a joystick.

The another input device 132 may receive input image data or text data.

The display unit 140 may be configured to display information input by the user, information provided for the user, various menus of the terminal 100, an interaction interface, a file, and/or playing of any multimedia file. In embodiments of this application, the display unit 140 may be configured to display an interface, a processing result, and the like of a generative application.

The memory 120 may be configured to store instructions and data. The memory 120 may mainly include an instruction storage region and a data storage region. The data storage region may store various types of data such as a multimedia file and a text. The instruction storage region may store software units such as an operating system, an application, and instructions required by at least one function, or subsets and extended sets thereof. The memory 120 may further include a non-volatile random access memory, and provide the processor 170 with management of hardware, software, and data resources in a computing processing device, support for control on software and applications, and the like. The memory 120 is further configured to: store a multimedia file, and run a program and store an application.

The processor 170 is a control center of the terminal 100, connects parts of the entire terminal 100 by using various interfaces and lines, and executes various functions of the terminal 100 and processes data by running or executing the instructions stored in the memory 120 and invoking the data stored in the memory 120, to entirely control the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It may be understood that the modem processor may alternatively not be integrated into the processor 170. In some embodiments, the processor and the memory may be implemented on a single chip. In some embodiments, the processor and the memory may alternatively be separately implemented on independent chips. The processor 170 may be further configured to: generate a corresponding operation control signal, send the operation control signal to a corresponding component in the computing processing device, and read and process data in software, especially read and process the data and the program in the memory 120, so that each functional module performs a corresponding function, to control the corresponding component to perform an action according to an instruction.

The memory 120 may be configured to store software code related to the data processing method. The processor 170 may perform steps of the data processing method of the chip, or may schedule other units (for example, the input unit 130 and the display unit 140) to implement corresponding functions.

The radio frequency unit 110 (optional) may be configured to receive and send information or receive and send signals in a call process. For example, after receiving downlink information of a base station, the radio frequency unit 110 sends the downlink information to the processor 170 for processing. In addition, the radio frequency unit 110 sends uplink-related data to the base station. Usually, an RF circuit includes but is not limited to an antenna, at least one amplifier, a transceiver, a coupler, a low noise amplifier (Low Noise Amplifier, LNA), and a duplexer. In addition, the radio frequency unit 110 may further communicate with a network device and another device through wireless communication. The wireless communication may use any communication standard or protocol, including but not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send image data or text data to the server 200, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 by using a power management system, so that functions such as charging and discharging management and power consumption management are implemented by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

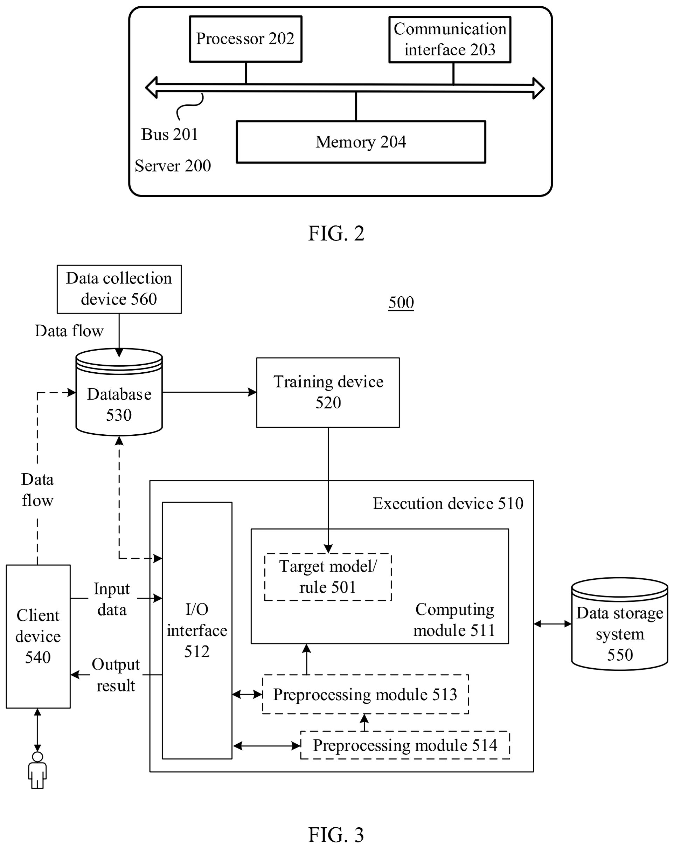

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, only one thick line is used to represent the bus in FIG. 2, but this does not mean that there is only one bus or only one type of bus.

The processor 202 may be any one or more of processors such as a central processing unit (central processing unit, CPU), a graphics processing unit (graphics processing unit, GPU), a microprocessor (microprocessor, MP), or a digital signal processor (digital signal processor, DSP).

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to the data processing method. The processor 202 may perform steps of the data processing method of a chip, or may schedule another unit to implement a corresponding function.

It should be understood that the terminal 100 and the server 200 may be central or distributed devices. Processors (for example, the processor 170 and the processor 202) in the terminal 100 and the server 200 each may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

It should be understood that steps related to a model inference process in embodiments of this application relate to an AI-related operation. When the AI operation is performed, an instruction execution architecture of the terminal device and the server is not limited to the architecture in which the processor and the memory are combined. The system architecture provided in embodiments of this application is described in detail below with reference to FIG. 3.

FIG. 3 is a diagram of a system architecture according to an embodiment of this application. As shown in FIG. 3, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501, and the preprocessing module 513 and the preprocessing module 514 are optional.

The execution device 510 may be the terminal device or the server that runs the generative application.

The data collection device 560 is configured to collect a training sample. The training sample may be image data, text data, or the like. After collecting the training sample, the data collection device 560 stores the training sample in the database 530.

The training device 520 may train a to-be-trained neural network (for example, a neural network model (for example, including a text encoder and a diffusion model) in embodiments of this application) based on the training sample maintained in the database 530, to obtain the target model/rule 501.

It should be understood that the training device 520 may perform a pre-training process on the to-be-trained neural network based on the training sample maintained in the database 530, or perform fine-tuning on a model based on pre-training.

It should be noted that during actual application, the training sample maintained in the database 530 is not necessarily collected by the data collection device 560, and may be received from another device. In addition, it should be noted that the training device 520 does not necessarily completely obtain the target model/rule 501 through training based on the training sample maintained in the database 530, and may perform model training by obtaining a training sample from a cloud or another location. The foregoing descriptions should not be construed as any limitation on embodiments of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 3, the input/output (input/output, I/O) interface 512 is configured for the execution device 510, and is configured to exchange data with an external device. A user may input data (for example, image data or text data in embodiments of this application) to the I/O interface 512 through the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may be directly used to process the input data.

When the execution device 510 preprocesses the input data, or when the computing module 511 in the execution device 510 performs a related processing process such as computing, the execution device 510 may invoke data, code, and the like in the data storage system 550 for corresponding processing, and may store data, instructions, and the like obtained through corresponding processing into the data storage system 550.

Finally, the I/O interface 512 provides a processing result for the client device 540, to provide the processing result for the user.

In the case shown in FIG. 3, the user may manually give input data, and "manually giving the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be presented in a specific manner, for example, display, sound, or an action. The client device 540 may also be used as a data collection end, collect the input data input into the I/O interface 512 and the output result output from the I/O interface 512 that are shown in the figure, use the input data and the output result as new sample data, and store the new sample data in the database 530. Certainly, the client device 540 may alternatively not perform collection. Instead, the I/O interface 512 directly stores, into the database 530 as new sample data, the input data input into the I/O interface 512 and the output result output from the I/O interface 512 that are shown in the figure.

It should be noted that FIG. 3 is merely a diagram of a system architecture according to an embodiment of this application. A location relationship between devices, components, modules, and the like shown in the figure does not constitute any limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows:

In embodiments of this application, the computing module 511 in the execution device 510 may obtain the code stored in the data storage system 550, to implement steps related to a model inference process in embodiments of this application.

In embodiments of this application, the computing module 511 of the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

Specifically, the computing module 511 in the execution device 510 may be the hardware system that has the instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 in the execution device 510 may be the combination of the hardware system that does not have the instruction execution function and the hardware system that has the instruction execution function. Some of the steps related to the model inference process provided in embodiments of this application may alternatively be implemented by the hardware system that does not have the instruction execution function in the computing module 511 in the execution device 510. This is not limited herein.

Details from a perspective of model training are as follows:

In embodiments of this application, the training device 520 may obtain code stored in a memory (which is not shown in FIG. 3, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

It should be understood that the training device 520 may be the combination of the hardware system that does not have the instruction execution function and the hardware system that has the instruction execution function. Some of the steps related to model training provided in embodiments of this application may alternatively be implemented by the hardware system that does not have the instruction execution function in the training device 520. This is not limited herein.

2. Image synthesis or natural language generation function-related cloud service provided by a server

In a possible implementation, the server may provide an image synthesis function-related service for a device side by using an application programming interface (application programming interface, API).

A terminal device may send a related parameter (for example, data such as an image or a text) to the server through the API provided by a cloud. The server may obtain a processing result or the like based on the received parameter, and return the processing result to the terminal.

For descriptions of the terminal and the server, refer to the descriptions in the foregoing embodiments. Details are not described herein again.

FIG. 4A shows a procedure of using an image synthesis function-related cloud service provided by a cloud platform.

1. Activate and purchase a content moderation service.

2. A user may download a software development kit (software development kit, SDK) corresponding to the content moderation service. Usually, the cloud platform provides SDKs of a plurality of development versions for the user to select based on a development environment requirement, for example, a Java-version SDK, a Python-version SDK, a PHP-version SDK, and an Android-version SDK.

3. After locally downloading an SDK of a corresponding version based on the requirement, the user imports an SDK project to a local development environment, and performs configuration and debugging in the local development environment. Another function may be further developed in the local development environment, to form an application that integrates an image synthesis function-related capability.

4. During use of an image synthesis function-related application, when the image synthesis function is required, invocation of an image synthesis function-related API may be triggered. When the application triggers the image synthesis function, an API request is initiated to a running instance of the image synthesis function-related service in a cloud environment. The API request carries an image or a text, and the running instance in the cloud environment processes the image to obtain a processing result.

5. The cloud environment returns the processing result to the application. In this way, the image synthesis function is invoked once.

Embodiments of this application relate to massive application of a neural network. Therefore, for ease of understanding, the following first describes related terms and related concepts such as the neural network in embodiments of this application.

(1) Neural network

The neural network may include neurons. The neuron may be an operation unit that uses $x_s$ (namely, input data) and an intercept of 1 as an input. An output of the operation unit may be as follows:

$$h_{W,b}\left(x\right) = f\left(W^T x\right) = f(\sum\nolimits_{s=1}^{n} W_s x_s + b)$$

s=1, 2, ..., n, n is a natural number greater than 1, $W_s$ is a weight of $x_s$, and b is a bias of the neuron. $f$ is an activation function (activation function) of the neuron, and is used to introduce a non-linear characteristic into the neural network to convert an input signal in the neuron into an output signal. The output signal of the activation function may be used as an input of a next convolutional layer, and the activation function may be a sigmoid function. The neural network is a network formed by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Transformer layer

A neural network includes an embedding layer and at least one transformer layer. The at least one transformer layer may be N transformer layers (N is an integer greater than 0), and each transformer layer includes an attention layer, an add and normalization (add & norm) layer, a feedforward (feedforward) layer, and an add and normalization layer that are adjacent in sequence. At the embedding layer, embedding processing is performed on a current input to obtain a plurality of embedding vectors. At the attention layer, P input vectors are obtained from a previous layer of a first transformer layer. Any first input vector in the P input vectors is used as a center. An intermediate vector corresponding to the first input vector is obtained based on an association degree between the first input vector and each input vector within a preset attention window range. In this way, P intermediate vectors corresponding to the P input vectors are determined. At a pooling layer, the P intermediate vectors are combined into Q output vectors. A plurality of output vectors obtained from a last transformer layer in transformer layers are used as feature representations of the current input.

(3) Attention mechanism (attention mechanism)

The attention mechanism simulates an internal process of a biological observation behavior, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism is less dependent on external information, and is better at capturing an internal correlation of data or features. An essential idea of the attention mechanism may be rewritten as the following formula:

Lx=‖Source‖ represents a length of a source. The formula means that constituent elements in the source are assumed to include a series of data pairs. In this case, an element query in a target (target) is given, similarity or a correlation between the query and each key is calculated to obtain a weight coefficient of a value corresponding to each key, and then weighted summation is performed on values, to obtain a final attention value. Therefore, in essence, the attention mechanism is to perform weighted summation on values of the elements in the source, and a query and a key are used to calculate a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates greater focus on a value corresponding to the weight, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of target=source. A specific calculation process of the self-attention mechanism is the same except that a calculation object changes.

(4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. Through use of NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

(5) Back propagation algorithm

A convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-driven back propagation process intended to obtain a parameter, for example, a weight matrix, of an optimal super-resolution model.

(6) Loss function

In a process of training a deep neural network, because it is expected that an output of the deep neural network is as close as possible to a value that is actually expected to be predicted, a current predicted value of the network may be compared with an actually expected target value, and then a weight vector at each layer of the neural network is updated based on a difference between the current predicted value and the target value (certainly, there is usually an initialization process before the first update, to be specific, a parameter is preconfigured for each layer of the deep neural network). For example, if the predicted value of the network is large, the weight vector is adjusted to decrease the predicted value, and adjustment is continuously performed, until the deep neural network can predict the actually expected target value or a value that is very close to the actually expected target value. Therefore, "how to obtain, through comparison, the difference between the predicted value and the target value" needs to be predefined. This is a loss function (loss function) or an objective function (objective function). The loss function and the objective function are important equations that are used to measure the difference between the predicted value and the target value. The loss function is used as an example. A higher output value (loss) of the loss function indicates a larger difference. Therefore, training of the deep neural network is a process of reducing the loss as much as possible.

(7) Diffusion model (diffusion model)

The diffusion model is a generative model used to generate data such as images and text. A core idea of the diffusion model is to restore original data by performing noise diffusion on the data and then gradually removing noise. The diffusion model includes two phases: a forward process (noise diffusion) and a reverse process (denoising recovery).

(8) Layout-to-image (L2I)

L2I is a computer vision task aimed at generating a realistic image based on an input semantic layout. The semantic layout usually includes information about a category, a location, and a shape of an object, and is used to guide appearance of the object in the final image in a generation process.

In recent years, diffusion models have made significant progress and gained considerable attention in the generative field. Although probabilistic diffusion models have shown outstanding performance in content creation and have become one of the most popular generative models, there are still some limitations when the probabilistic diffusion models are applied to data generation of perception tasks (such as object detection). Specifically, in data generation of complex perception tasks such as object detection and pose estimation, fine-grained geometric control, for example, control of a bounding box location, is required. However, performance of existing diffusion models is not ideal in this aspect, and it is difficult to accurately control locations and relative relationships of objects in generated images.

To resolve the foregoing problem, embodiments of this application provide a data processing method. The following describes in detail the data processing method in embodiments of this application with reference to accompanying drawings.

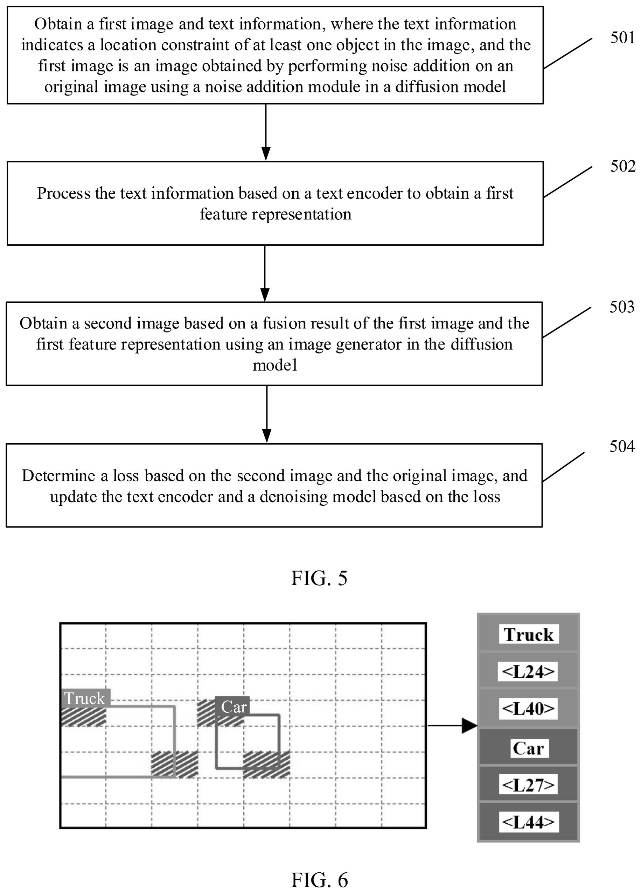

FIG. 5 is a schematic flowchart of a data processing method according to an embodiment of this application. As shown in FIG. 5, the data processing method provided in this embodiment of this application may include steps 501 to 503. The following separately describes these steps in detail.

501: Obtain a first image and text information, where the text information indicates a location constraint of at least one object in an image, and the first image is an image obtained by performing noise addition using a noise addition module in a diffusion model.

In a possible implementation, the first image may be an image obtained by performing noise addition on an original image using the noise addition module in the diffusion model.

The original image may be locally pre-stored in a terminal or a server, may be obtained by the terminal from the outside (for example, the internet), or may be collected by the terminal in real time, for example, collected in real time through a camera of the terminal.

The noise addition may be a stochastic noise addition process of forward propagation in the diffusion model.

In a possible implementation, to generate an image that has a style similar to that of the original image and that meets a specific geometric constraint feature, the original image and text information that represents the geometric constraint feature may be first specified as a prompt (prompt).

In a possible implementation, the text information may be obtained. The text information may include a geometric control constraint (including, but not limited to, control information such as a location constraint and a pose) in an image to be generated by using the diffusion model. For example, the text information may indicate the location constraint of the at least one object in the image. The object may be a vehicle, a person, or the like.

The text information may be geometric control information used to describe an object included in the original image. In this case, the generated image of the diffusion model is equivalent to an image that has a same geometric feature as the original image. This is usually applied to, but not limited to, the foregoing scenario 1 (detection data generation in the autonomous driving scenario) and scenario 2 (watch face image generation).

Alternatively, the text information may be geometric control information indicating an object that is not included in the original image but needs to be included in the generated image. This is usually applied to, but not limited to, the foregoing scenario 3 (AI model generation in the e-commerce scenario).

In a possible implementation, the text information specifically includes a size of a detection box corresponding to each object in the image and a location of the detection box in the image.

For example, the size of the detection box and the location of the detection box in the image may be indicated by using coordinate locations of diagonal endpoints of the detection box in the image.

For example, image spatial coordinates may be divided into grids, and each vertex of a bounding box is represented by a location token (location token) corresponding to a location of a grid in which the bounding box is located. For example, the location token may be indication information of the grid in which the bounding box is located.

In the scenario 1 and the scenario 2 described above, an image that has a similar style, a same geometric feature, and a same location feature as the object included in the original image needs to be generated.

To implement the foregoing function, to enable a model finally generated by using the diffusion model to have the geometric feature and the location feature of the object in the original image, a size and a location of a detection box of the included object may be extracted from the original image.

In a possible implementation, to ensure authenticity of the object in the generated image, the text information further includes a category of image content in the detection box, or camera viewpoint information present when the first image is captured. The text information includes the category of the image content in the detection box, so that a category of the object in the generated image is consistent with a category of the object included in the original image. The text information includes the viewpoint information, so that a size relationship and a location relationship between objects in the generated image can be more authentic and accurate (for example, meet a constraint of perspective scaling).

For example, the original image may be collected by a camera on a vehicle, and the viewpoint information may be a viewpoint orientation present when the camera captures the original image, for example, front, front left, front right, left, or right.

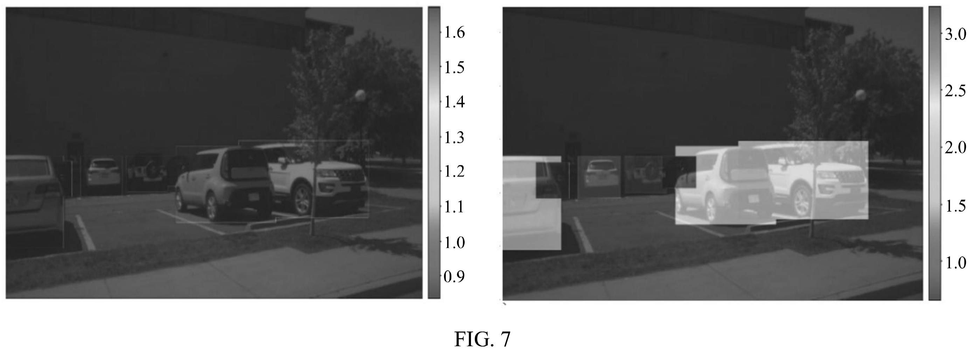

The scenario 1 is used as an example. With reference to FIG. 6 and FIG. 7, for a scenario of detection task data generation, text information may include three parts: a detection box category $c_i$, detection box coordinates $b_i$, and an additional geometric condition $v$ (for example, viewpoint information), where $c_i$ and $v$ may be directly represented as corresponding text descriptions. An example of the text description is as follows:

$$L = \left( \{c_i, b_i\}_{i=1}^{N}, v \right)$$

To express continuous bounding box coordinates $b_i$ in the text information, spatial coordinates of an image may be divided into grids. Each vertex or the like of a bounding box is represented by a location token (location token) corresponding to a location of a grid in which the bounding box is located. As shown in FIG. 6, a category of a detection box on the left is "truck" (truck), and a location constraint is a grid (a 24th grid) in which a top-left vertex of the detection box is located and a grid (a 40th grid) in which a bottom-right vertex of the detection box is located; and a category of a detection box on the right is "car" (car), and a location constraint is a grid (a 27th grid) in which a top-left vertex of the detection box is located and a grid (a 44th grid) in which a bottom-right vertex of the detection box is located.

For example, the following prompt template may be used to construct the text information:

An image of {view} camera with {bbox}

"view" is camera viewpoint information, and "bbox" is location information and a category of a detection box.

The scenario 2 is used as an example. An image including a watch face may be input as an original image, and text information may be location information and a category of a detection box of each element (for example, a hand, a day-of-week display, a date display, a step count, heart rate monitoring, or a battery level) in the watch face.

In the scenario 3 described above or a similar scenario, an image that meets a specific pose of a person needs to be generated based on an original image. Therefore, the text information needs to indicate the pose of the person.

In a possible implementation, the object is a key point on a person for indicating a pose. In other words, the text information may indicate location constraints of a plurality of key points of the person in the image. For example, the key point may be a body joint of the person.

502: Process the text information based on a text encoder to obtain a first feature representation.

In a possible implementation, the text information may be input into the text encoder, to obtain the first feature representation corresponding to the text information. The text encoder may be a model, for example, BERT or GPT. This is not limited herein.

503: Obtain a second image based on a fusion result of the first image and the first feature representation using an image generator in the diffusion model.

In a possible implementation, the first image and the first feature representation may be fused, for example, through attention mechanism-based interaction, to obtain the fusion result. It should be understood that before fusion, dimension adjustment may be further performed on the first feature representation or the first image, so that the first image and the first feature representation have a same size after adjustment, and therefore information exchange can be implemented.

For specific descriptions of the image generator, refer to the descriptions of the diffusion model in a conventional technology. Details are not described herein again.

504: Determine a loss based on the second image and the original image, and update the text encoder and a denoising model based on the loss.

In a possible implementation, the loss may be determined based on the second image and the original image, and the text encoder and the denoising model are updated based on the loss. An updated text encoder and an updated denoising model may generate, based on the original image and the text information, an image that has a style similar to that of the original image and meets a geometric constraint specified in the text information. In this embodiment of this application, a feature representation of text information indicating a location constraint of an object in a generated image and the image are input into the image generator together. Compared with the conventional technology in which only the first image is used as an input of the image generator, in this application, the image generator can more accurately obtain an image that meets a geometric constraint specified in the text information.

In addition, transferability of the text encoder is used, so that a specific conditional encoding network module does not need to be designed for a specific geometric condition, and therefore an entire framework has strong flexibility and scalability.

In a possible implementation, to alleviate an imbalance problem of a foreground region in the generated image, values of a loss corresponding to the foreground region and a loss corresponding to a background region may be controlled in a training process, to help the model pay more attention to generation of a foreground object, thereby improving generation effect of the foreground region.

At least one object in the generated image (that is, the second image in this embodiment of this application) may be located in the foreground region in the image. When the loss is constructed, a first loss may be determined based on a foreground region of the second image and a foreground region of the original image; a second loss may be determined based on a background region of the second image and a background region of the original image; and the first loss and the second loss may be fused through weighting to obtain the loss, where a weight corresponding to the first loss is greater than a weight corresponding to the second loss.

In this embodiment of this application, to better complete generation of the foreground object to assist a perception task such as object detection, constant reweighting may be used to distinguish between the foreground region and the background region.

In a possible implementation, to alleviate an imbalance problem of the foreground region in the generated image, values of a loss corresponding to a small-area object (or referred to as a small object) in the foreground region and a loss corresponding to a large-area object in the foreground region may be controlled in the training process, to improve generation effect of the small-area object.

In a possible implementation, the at least one object includes a first object and a second object; and the first object is located in a first foreground region in the second image, and the second object is located in a second foreground region in the second image. When the loss is constructed, a first sub-loss may be determined based on the first foreground region and a foreground region that is in the original image and that corresponds to the first foreground region; a second sub-loss may be determined based on the second foreground region and a foreground region that is in the original image and that corresponds to the second foreground region; and the first sub-loss and the second sub-loss may be fused through weighting to obtain the first loss, where the first loss is a part of the loss, an area of the first foreground region is greater than that of the second foreground region, and a weight corresponding to the first sub-loss is less than a weight corresponding to the second foreground region. It should be understood that the loss may further include the loss corresponding to the background region.

It should be understood that a specific value of the weight may be related to a value of the area. For example, a larger area indicates a smaller weight.

Weight allocation between the foreground region and the background region or between foreground regions may be referred to as a reweighting process. For example, the mechanism specifically includes two parts:

1. Constant reweighting: A weight of the loss of the foreground region is set to w (w ≥ 1) to distinguish between the foreground region and the background region.
2. Area reweighting: To enhance the generation effect of the model on the small object, an area of each foreground object is further considered. A smaller area has a larger loss weight.

For example, a specific value of a weight may be determined with reference to the following formula:

$$m'_{ij} = \begin{cases} w/c_{ij}^{p} & (i, j) \in \text{foreground} \\ 1/(H' * W')^{p} & (i, j) \in \text{background} \end{cases},$$

$$m_{ij} = H' * W' * m'_{ij} / \sum_{i,j} m'_{ij},$$

$c_{i,j}$ represents an area of a bounding box to which a pixel (i, j) belongs, and p is an adjustable parameter. To improve numerical stability in a fine-tuning process, a reweighted mask m' is normalized to obtain m. FIG. 7 and FIG. 8 show an example of area reweighting.

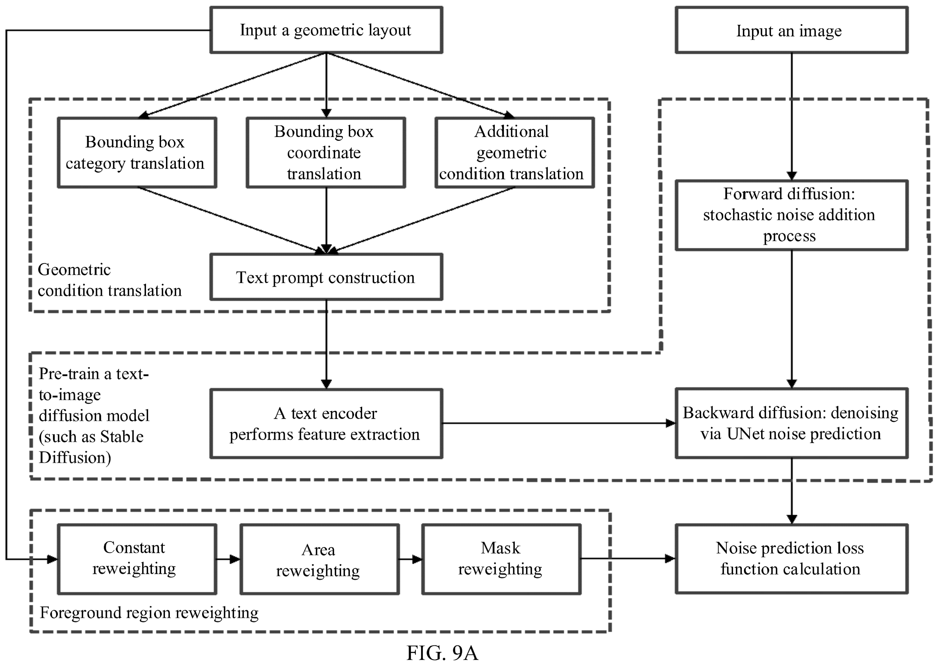

FIG. 9A is a diagram of a specific procedure according to an embodiment of this application.

The following describes beneficial effect in embodiments of this application with reference to an experiment. Training is performed on a public dataset NuImages. With reference to Table 1, embodiments of this application (GeoDiffusion) may obtain a current optimal generation result (including image quality FID and object localization mAP), to prove that GeoDiffusion can generate a highly realistic image while strictly adhering to an input geometric condition.

Table 1

| Method | Input Resolution | Epochs | FID↓ | Average Precision↑ | | | | |
|---|---|---|---|---|---|---|---|---|
| | | | | mAP | AP$_{50}$ | AP$_{75}$ | AP$^{\overline{m}}$ | AP$^{l}$ |
| Oracle* | - | - | - | 48.2 | 75.0 | 52.0 | 46.7 | 60.5 |
| LostGAN [40] | 256×256 | 256 | 59.95 | 4.4 | 9.8 | 3.3 | 2.1 | 12.3 |
| LAMA [24] | 256×256 | 256 | 63.85 | 3.2 | 8.3 | 1.9 | 2.0 | 9.4 |
| Taming [22] | 256×256 | 256 | 32.84 | 7.4 | 19.0 | 4.8 | 2.8 | 18.8 |
| GeoDiffusion | 256×256 | 64 | 15.67 | 15.4 | 29.4 | 14.5 | 9.7 | 36.0 |
| GeoDiffusion | 512×512 | 64 | 12.62 | 21.4 | 46.1 | 17.4 | 12.9 | 44.9 |

(continued)

| Method | Input Resolution | Epochs | FID↓ | Average Precision↑ | | | | |
|---|---|---|---|---|---|---|---|---|
| | | | | mAP | $AP_{50}$ | $AP_{75}$ | $AP^{\overline{m}}$ | $AP^{l}$ |
| GeoDiffusion | 800×456 | 64 | 11.99 | 30.1 | 59.2 | 27.6 | 24.0 | 53.2 |

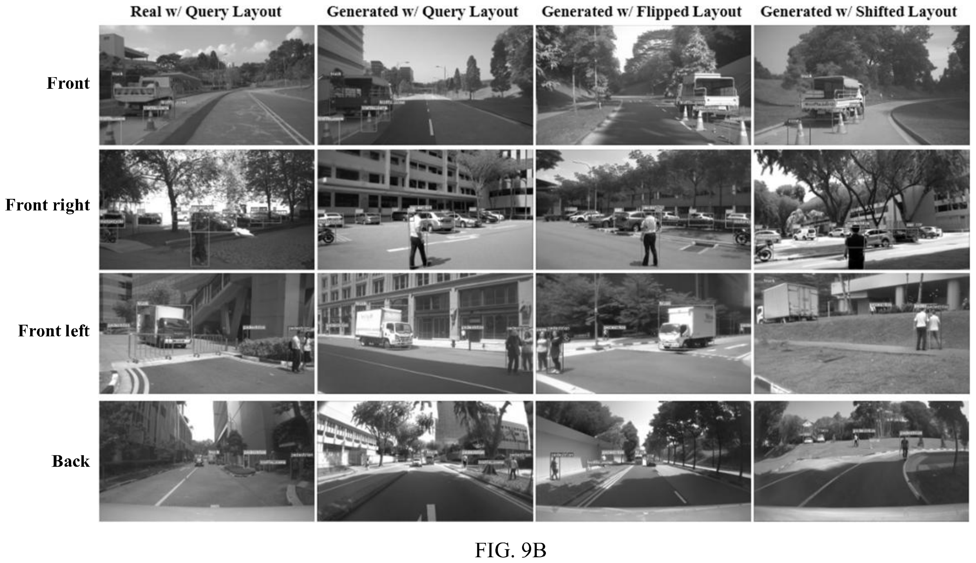

In addition, with reference to FIG. 9B, data generated by an extension model may be used to assist in training an object detection model. GeoDiffusion is used to generate data to enhance a real training dataset. The object detection model can achieve consistent performance improvements across various categories, with especially significant improvements on annotation-scarce long-tail categories (truck & trailer & bus, which only account for 7.2% of annotated data).

Table 2

| Method | mAP | car | truck | trailer | bus | construction | bicycle | motorcycle | pedestrian | traffic cone | barrier |
|---|---|---|---|---|---|---|---|---|---|---|---|
| Real only | 36.9 | 52.9 | 40.9 | 15.5 | 42.1 | 24.0 | 44.7 | 46.7 | 31.3 | 32.5 | 38.9 |
| LostGAN [40] | 35.6 | 51.7 | 39.6 | 12.9 | 41.3 | 22.7 | 42.4 | 45.6 | 30.0 | 31.6 | 37.9 |
| LAMA [24] | 35.6 | 51.7 | 39.2 | 14.3 | 40.5 | 22.9 | 43.2 | 44.9 | 30.0 | 31.3 | 38.3 |
| Taming [22] | 35.8 | 51.9 | 39.3 | 14.7 | 41.1 | 22.4 | 43.1 | 45.4 | 30.4 | 31.6 | 38.1 |
| GeoDiffusion | 37.4 | 53.0 | 42.4 | 16.5 | 43.5 | 25.7 | 44.8 | 46.7 | 30.6 | 31.7 | 39.2 |

In addition, GeoDiffusion demonstrates an extremely strong generalization capability for scenario layouts that have not been seen, fully meeting requirements of users for simulating new scenarios. GeoDiffusion also demonstrates extremely strong robustness even for rare scenarios outside normal distribution.

A general detection dataset COCO is used as an example. The following operation procedure is performed: A geometric condition (for example, a bounding box) is converted into a text prompt based on a category annotation and the bounding box of an object in a training set, to obtain an image-text pair; the constructed image-text pair is used to fine-tune a pre-trained text-to-image diffusion model, and a foreground reweighting mechanism is performed in a training process, to adaptively allocate a higher loss weight to a foreground region while considering area-difference-based weighting between foreground objects at the same time.

Table 3 shows data generation effect of the COCO dataset.

Table 3

| Method | Epoch | FID$\downarrow$ | mAP$\uparrow$ | AP$_{50}\uparrow$ | $\Delta$P$_{75}\uparrow$ |
|---|---|---|---|---|---|
| LostGAN [40] | 200 | 42.55 | 9.1 | 15.3 | 9.8 |
| LAMA [24] | 200 | 31.12 | 13.4 | 19.7 | 14.9 |
| CAL2IM [17] | 200 | 29.56 | 10.0 | 14.9 | 11.1 |
| Taming [22] | 68+60 | 33.68 | - | - | - |
| TwFA [44] | 300 | 22.15 | - | 28.2 | 20.1 |
| GeoDiffusion | 50 | 19.64 | 26.2 | 39.6 | 29.8 |

In addition, an embodiment of this application further provides a data processing method. Different from the embodiment corresponding to FIG. 5, this embodiment shows a model inference process performed based on a model obtained after training in the embodiment corresponding to FIG. 5. The method may include: obtaining a first image and text information, where the text information indicates a location constraint of at least one object in an image, and the first image is an image obtained by performing noise addition using a noise addition module in a diffusion model; processing the text information based on a text encoder to obtain a first feature representation; and obtaining a second image based on a fusion result of the first image and the first feature representation by using a denoising model in the diffusion model, where an object included in the second image meets the location constraint indicated by the text information.

For specific descriptions of the inference process, refer to the descriptions of the feedforward process in the embodiment corresponding to FIG. 5. Similarities are not described herein again.

In a possible implementation, the first image is an image obtained by performing noise addition on an original image using the noise addition module in the diffusion model, the original image includes the at least one object, and the text information specifically includes a size of a detection box corresponding to each object in the original image and a location of the detection box in the original image.

In a possible implementation, the text information further includes: a category of image content in the detection box, or camera viewpoint information present when the first image is captured.

In a possible implementation, the object is a key point on a person for indicating a pose.

In a possible implementation, the fusion result is obtained by performing attention mechanism-based interaction on the first image and the first feature representation.

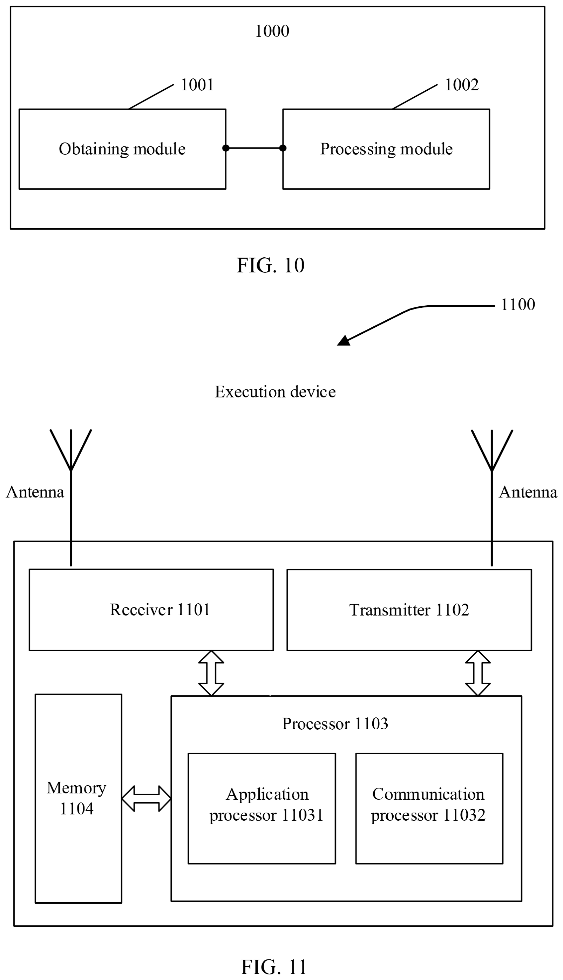

FIG. 10 is a diagram of a structure of a data processing apparatus according to an embodiment of this application. As shown in FIG. 10, the data processing apparatus 1000 provided in this embodiment of this application includes:

an obtaining module 1001, configured to obtain a first image and text information, where the text information indicates a location constraint of at least one object in an image, and the first image is an image obtained by performing noise addition on an original image using a noise addition module in a diffusion model, where

for specific descriptions of the obtaining module 1001, reference may be made to the descriptions of step 501 in the foregoing embodiment, and this is not described herein again; and

a processing module 1002, configured to: process the text information based on a text encoder to obtain a first feature representation;

obtain a second image based on a fusion result of the first image and the first feature representation using an image generator in the diffusion model; and

determine a loss based on the second image and the original image, and update the text encoder and a denoising model based on the loss, where

for specific descriptions of the processing module 1002, reference may be made to the descriptions of step 502 to step 504 in the foregoing embodiment, and this is not described herein again.

In a possible implementation, the processing module 1002 is specifically configured to:

determine a first loss based on a foreground region of the second image and a foreground region of the original image;
determine a second loss based on a background region of the second image and a background region of the original image; and
fuse the first loss and the second loss through weighting to obtain the loss, where a weight corresponding to the first loss is greater than a weight corresponding to the second loss.

In a possible implementation, the at least one object includes a first object and a second object; the first object is located in a first foreground region in the second image, and the second object is located in a second foreground region in the second image; and the processing module 1002 is specifically configured to:

determine a first sub-loss based on the first foreground region and a foreground region that is in the original image and that corresponds to the first foreground region;
determine a second sub-loss based on the second foreground region and a foreground region that is in the original image and that corresponds to the second foreground region; and
fuse the first sub-loss and the second sub-loss through weighting to obtain the first loss, where the first loss is a part of the loss, an area of the first foreground region is greater than that of the second foreground region, and a weight corresponding to the first sub-loss is less than a weight corresponding to the second foreground region.

In a possible implementation, the first image is the image obtained by performing noise addition on the original image using the noise addition module in the diffusion model, the original image includes the at least one object, and the text information specifically includes a size of a detection box corresponding to each object in the original image and a location of the detection box in the original image.

In a possible implementation, the text information further includes: a category of image content in the detection box, or camera viewpoint information present when the first image is captured.

In addition, an embodiment of this application further provides a data processing apparatus. The apparatus includes:

an obtaining module, configured to obtain a first image and text information, where the text information indicates a location constraint of at least one object in an image, and the first image is an image obtained by performing noise addition using a noise addition module in a diffusion model; and
a processing module, configured to: process the text information based on a text encoder to obtain a first feature representation; and
obtain a second image based on a fusion result of the first image and the first feature representation by using a denoising model in the diffusion model, where an object included in the second image meets the location constraint indicated by the text information.

In a possible implementation, the first image is an image obtained by performing noise addition on an original image using the noise addition module in the diffusion model, the original image includes the at least one object, and the text information specifically includes a size of a detection box corresponding to each object in the original image and a location of the detection box in the original image.

In a possible implementation, the text information further includes: a category of image content in the detection box, or camera viewpoint information present when the first image is captured.

In a possible implementation, the object is a key point on a person for indicating a pose.

In a possible implementation, the fusion result is obtained by performing attention mechanism-based interaction on the first image and the first feature representation.

The following describes an execution device provided in embodiments of this application. FIG. 11 is a diagram of a structure of an execution device according to an embodiment of this application. The execution device 1100 may be specifically represented as a virtual reality VR device, a mobile phone, a tablet, a notebook computer, an intelligent wearable device, a monitoring data processing device, a server, or the like. This is not limited herein. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data for the processor 1103. A part of the memory 1104 may further include a non-volatile random access memory (non-volatile random access memory, NVRAM). The memory 1104 stores a processor and operation instructions, an executable module, a data structure, a subset thereof, or an extended set thereof. The operation instructions may include various operation instructions for implementing various operations.

The processor 1103 controls operations of the execution device. During specific application, components of the execution device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1103 or may be implemented by the processor 1103. The processor 1103 may be an integrated circuit chip and has a signal processing capability. In an implementation process, steps in the method may be implemented by using a hardware integrated logic circuit in the processor 1103, or by using instructions in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1103 may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1104, and the processor 1103 reads information in the memory 1104 and completes steps related to the model inference process in the method in combination with hardware of the processor.

The receiver 1101 may be configured to: receive input digit or character information, and generate a signal input related to a related setting and function control of the execution device. The transmitter 1102 may be configured to output digit or character information through a first interface. The transmitter 1102 may be further configured to send instructions to a disk group through the first interface, to modify data in the disk group. The transmitter 1102 may further include a display device, for example, a display.

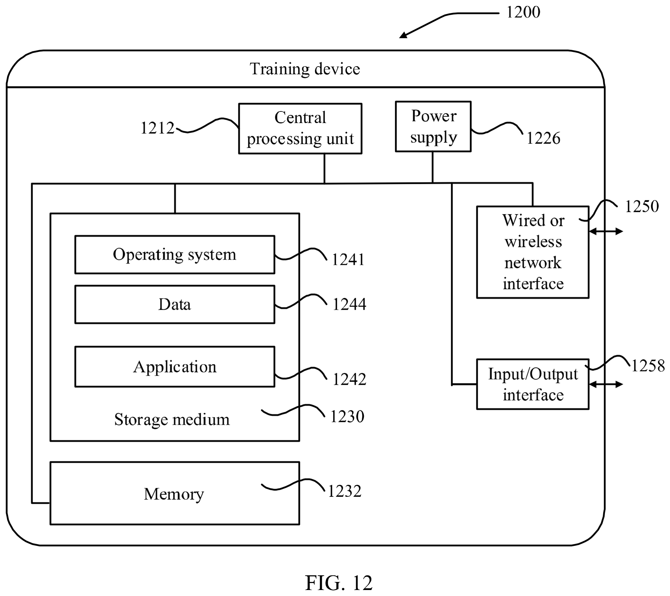

Embodiments of this application further provide a training device. FIG. 12 is a diagram of a structure of a training device according to an embodiment of this application. Specifically, the training device 1200 is implemented by one or more servers, the training device 1200 may vary greatly with different configurations or performance, and may include one or more central processing units (central processing units, CPUs) 1212 (for example, one or more processors), a memory 1232, and one or more storage media 1230 (for example, one or more mass storage devices) that store an application 1242 or data 1244. The memory 1232 and the storage medium 1230 may be transient storage or persistent storage. The program stored in the storage medium 1230 may include one or more modules (not shown in the figure). Each module may include a series of instruction operations for the training device. Further, the central processing unit 1212 may be configured to communicate with the storage medium 1230, to perform, on the training device 1200, a series of instruction operations in the storage medium 1230.

The training device 1200 may further include one or more power supplies 1226, one or more wired or wireless network interfaces 1250, one or more input/output interfaces 1258, or one or more operating systems 1241, for example, Windows Server™, Mac OS X™, Unix™, Linux™, and FreeBSD™.

In this embodiment of this application, the central processing unit 1212 is configured to perform actions related to model training in the foregoing embodiment.

An embodiment of this application further provides a computer program product. When the computer program product runs on a computer, the computer is caused to perform steps performed by the foregoing execution device, or the computer is caused to perform steps performed by the foregoing training device.

An embodiment of this application further provides a computer-readable storage medium. The computer-readable storage medium stores a program used to process a signal. When the program is run on a computer, the computer is caused to perform steps performed by the foregoing execution device, or the computer is caused to perform steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is a storage unit in the chip, for example, a register or a buffer; or the storage unit may be a storage unit that is in a radio access device end and that is located outside the chip, for example, a read-only memory (read-only memory, ROM), another type of static storage device that can store static information and instructions, or a random access memory (random access memory, RAM).

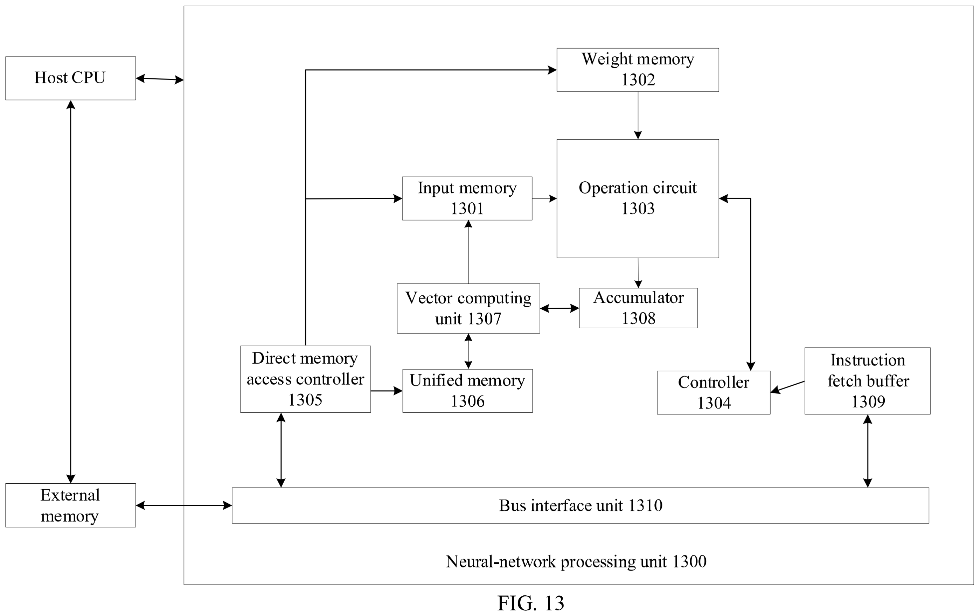

Specifically, FIG. 13 is a diagram of a structure of a chip according to an embodiment of this application. The chip may be represented as a neural-network processing unit NPU 1300. The NPU 1300 is mounted to a host CPU (Host CPU) as a coprocessor, and the host CPU allocates a task to the NPU. A core part of the NPU is an operation circuit 1303. A controller 1304 controls the operation circuit 1303 to extract matrix data in a memory and perform a multiplication operation.

In some implementations, the operation circuit 1303 includes a plurality of process engines (Process Engines, PEs). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there are an input matrix A, a weight matrix B, and an output matrix C. The operation circuit extracts, from the weight memory 1302, data corresponding to the matrix B, and buffers the data on each PE in the operation circuit. The operation circuit fetches data of the matrix A from an input memory 1301, performs a matrix operation on the data and the matrix B, and stores an obtained partial result or final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) 1305. Input data is also transferred to the unified memory 1306 through the DMAC.

BIU, which is the abbreviation for Bus Interface Unit, that is, a bus interface unit 1310, is configured for interaction between an AXI bus and the DMAC and interaction between the AXI bus and an instruction fetch buffer (Instruction Fetch Buffer, IFB) 1309.

The bus interface unit 1310 (Bus Interface Unit, BIU for short) is used by the instruction fetch buffer 1309 to obtain an instruction from an external memory, and further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer input data to the input memory 1301.

A vector computing unit 1307 includes a plurality of operation processing units; and if necessary, performs further processing such as vector multiplication, vector addition, an exponential operation, a logarithmic operation, or value comparison on an output of the operation circuit 1303. The vector computing unit 1307 is mainly used for non-convolutional/fully connected layer network computation in a neural network, such as batch normalization (batch normalization), pixel-level summation, and upsampling on a feature map.

In some implementations, the vector computing unit 1307 can store a processed output vector in the unified memory 1306. For example, the vector computing unit 1307 may apply a linear function or a non-linear function to the output of the operation circuit 1303, for example, perform linear interpolation on a feature map extracted by a convolutional layer, or for another example, use a vector of accumulated values to generate an activation value. In some implementations, the vector computing unit 1307 generates a normalized value, a value obtained through pixel-level summation, or both a normalized value and a value obtained through pixel-level summation. In some implementations, the processed output vector can be used as an activation input to the operation circuit 1303, for example, used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located in one location, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software in addition to necessary universal hardware, or certainly by using dedicated hardware, including an application-specific integrated circuit, a dedicated CPU, a dedicated memory, a dedicated component, and the like. Generally, all functions completed by a computer program can be easily implemented by using corresponding hardware, and a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data processing method, wherein the method comprises:

   obtaining a first image and text information, wherein the text information indicates a location constraint of at least one object in an image, and the first image is an image obtained by performing noise addition using a noise addition module in a diffusion model;
   processing the text information based on a text encoder to obtain a first feature representation; and
   obtaining a second image based on a fusion result of the first image and the first feature representation by using a denoising model in the diffusion model, wherein an object comprised in the second image meets the location constraint indicated by the text information.

2. The method according to claim 1, wherein the first image is an image obtained by performing noise addition on an original image using the noise addition module in the diffusion model, the original image comprises the at least one object, and the text information specifically comprises a size of a detection box corresponding to each object in the original image and a location of the detection box in the original image.

3. The method according to claim 2, wherein the text information further comprises: a category of image content in the detection box, or camera viewpoint information present when the first image is captured.

4. The method according to claim 1, wherein the object is a key point on a person for indicating a pose.

5. The method according to any one of claims 1 to 4, wherein the fusion result is obtained by performing attention mechanism-based interaction on the first image and the first feature representation.

6. A data processing method, wherein the method comprises:

   obtaining a first image and text information, wherein the text information indicates a location constraint of at least one object in an image, and the first image is an image obtained by performing noise addition on an original image using a noise addition module in a diffusion model;
   processing the text information based on a text encoder to obtain a first feature representation;
   obtaining a second image based on a fusion result of the first image and the first feature representation using an image generator in the diffusion model; and

determining a loss based on the second image and the original image, and updating the text encoder and the denoising model based on the loss.

7. The method according to claim 6, wherein the at least one object is located in a foreground region in the second image; and the determining the loss based on the second image and the original image comprises:

determining a first loss based on the foreground region of the second image and a foreground region of the original image;
determining a second loss based on a background region of the second image and a background region of the original image; and
fusing the first loss and the second loss through weighting to obtain the loss, wherein a weight corresponding to the first loss is greater than a weight corresponding to the second loss.

8. The method according to claim 6 or 7, wherein the at least one object comprises a first object and a second object; the first object is located in a first foreground region in the second image, and the second object is located in a second foreground region in the second image; and the determining the loss based on the second image and the original image comprises:

determining a first sub-loss based on the first foreground region and a foreground region that is in the original image and that corresponds to the first foreground region;
determining a second sub-loss based on the second foreground region and a foreground region that is in the original image and that corresponds to the second foreground region; and
fusing the first sub-loss and the second sub-loss through weighting to obtain the first loss, wherein the first loss is a part of the loss, an area of the first foreground region is greater than that of the second foreground region, and a weight corresponding to the first sub-loss is less than a weight corresponding to the second foreground region.

9. The method according to any one of claims 6 to 8, wherein the first image is the image obtained by performing noise addition on the original image using the noise addition module in the diffusion model, the original image comprises the at least one object, and the text information specifically comprises a size of a detection box corresponding to each object in the original image and a location of the detection box in the original image.

10. The method according to claim 9, wherein the text information further comprises: a category of image content in the detection box, or camera viewpoint information present when the first image is captured.

11. A data processing apparatus, wherein the apparatus comprises:

an obtaining module, configured to obtain a first image and text information, wherein the text information indicates a location constraint of at least one object in an image, and the first image is an image obtained by performing noise addition using a noise addition module in a diffusion model; and
a processing module, configured to: process the text information based on a text encoder to obtain a first feature representation; and
obtain a second image based on a fusion result of the first image and the first feature representation by using a denoising model in the diffusion model, wherein an object comprised in the second image meets the location constraint indicated by the text information.

12. The apparatus according to claim 11, wherein the first image is an image obtained by performing noise addition on an original image using the noise addition module in the diffusion model, the original image comprises the at least one object, and the text information specifically comprises a size of a detection box corresponding to each object in the original image and a location of the detection box in the original image.

13. The apparatus according to claim 12, wherein the text information further comprises: a category of image content in the detection box, or camera viewpoint information present when the first image is captured.

14. The apparatus according to claim 11, wherein the object is a key point on a person for indicating a pose.

15. The apparatus according to any one of claims 11 to 14, wherein the fusion result is obtained by performing attention mechanism-based interaction on the first image and the first feature representation.

16. A data processing apparatus, wherein the apparatus comprises:

   an obtaining module, configured to obtain a first image and text information, wherein the text information indicates a location constraint of at least one object in an image, and the first image is an image obtained by performing noise addition on an original image using a noise addition module in a diffusion model; and
   a processing module, configured to: process the text information based on a text encoder to obtain a first feature representation;
   obtain a second image based on a fusion result of the first image and the first feature representation using an image generator in the diffusion model; and
   determine a loss based on the second image and the original image, and update the text encoder and the denoising model based on the loss.

17. The apparatus according to claim 16, wherein the processing module is specifically configured to:

   determine a first loss based on a foreground region of the second image and a foreground region of the original image;
   determine a second loss based on a background region of the second image and a background region of the original image; and
   fuse the first loss and the second loss through weighting to obtain the loss, wherein a weight corresponding to the first loss is greater than a weight corresponding to the second loss.

18. The apparatus according to claim 16 or 17, wherein the at least one object comprises a first object and a second object; the first object is located in a first foreground region in the second image, and the second object is located in a second foreground region in the second image; and the processing module is specifically configured to:

   determine a first sub-loss based on the first foreground region and a foreground region that is in the original image and that corresponds to the first foreground region;
   determine a second sub-loss based on the second foreground region and a foreground region that is in the original image and that corresponds to the second foreground region; and
   fuse the first sub-loss and the second sub-loss through weighting to obtain the first loss, wherein the first loss is a part of the loss, an area of the first foreground region is greater than that of the second foreground region, and a weight corresponding to the first sub-loss is less than a weight corresponding to the second foreground region.

19. The apparatus according to any one of claims 16 to 18, wherein the first image is the image obtained by performing noise addition on the original image using the noise addition module in the diffusion model, the original image comprises the at least one object, and the text information specifically comprises a size of a detection box corresponding to each object in the original image and a location of the detection box in the original image.

20. The apparatus according to claim 19, wherein the text information further comprises: a category of image content in the detection box, or camera viewpoint information present when the first image is captured.

21. A computer storage medium, wherein the computer storage medium stores one or more instructions; and when the instructions are executed by one or more computers, the one or more computers are caused to perform operations of the method according to any one of claims 1 to 10.

22. A computer program product, comprising computer-readable instructions, wherein when the computer-readable instructions are run on a computer device, the computer device is caused to perform the method according to any one of claims 1 to 10.

23. A system, comprising at least one processor and at least one memory, wherein the processor and the memory are connected and communicate with each other through a communication bus;

   the at least one memory is configured to store code; and
   the at least one processor is configured to execute the code to perform the method according to any one of claims 1 to 10.

Start

Intelligent information chain

Intelligent products and industry applications

| Translation/Text analysis/... | Speech/Vision/ Image/... |

Data

Data processing:

| Data training/ Machine learning/ Deep learning | Searching/ Inference/ Decision making | ... |

Infrastructure | Sensor | Intelligent chip | Basic platform | ...

IT value chain

FIG. 1A

101 Parameter → 102 Generative application → 103 Processing result

FIG. 1B

Parameter →

Processing result ←

Terminal 100        Server 200

FIG. 1C

Terminal 100

(Optional)

110 — Radio frequency unit

Camera    (Optional) 150

160

190 — Power supply

170

Speaker 161

Microphone 162

Audio circuit (optional)

Headset jack — 163

180 — External interface

Processor

120 — Memory

(Optional) 131

Touchscreen

130 — Input unit

Display unit — 140

Another input device

132

FIG. 1D

FIG. 2

FIG. 3

FIG. 4A

FIG. 4B

29

| | |
|---|---|
| Obtain a first image and text information, where the text information indicates a location constraint of at least one object in the image, and the first image is an image obtained by performing noise addition on an original image using a noise addition module in a diffusion model | 501 |
| Process the text information based on a text encoder to obtain a first feature representation | 502 |
| Obtain a second image based on a fusion result of the first image and the first feature representation using an image generator in the diffusion model | 503 |
| Determine a loss based on the second image and the original image, and update the text encoder and a denoising model based on the loss | 504 |

FIG. 5

FIG. 6

FIG. 7

EP 4 700 722 A1

(a) Fine-tuning T2I diffusion models for L2I generation

(b) Generated images can be utilized to train object detectors

FIG. 8

EP 4 700 722 A1

Input an image → Forward diffusion: stochastic noise addition process → Backward diffusion: denoising via UNet noise prediction → Noise prediction loss function calculation

Input a geometric layout → Additional geometric condition translation / Bounding box coordinate translation / Bounding box category translation → Text prompt construction → A text encoder performs feature extraction

Geometric condition translation

Pre-train a text-to-image diffusion model (such as Stable Diffusion)

Constant reweighting → Area reweighting → Mask reweighting

Foreground region reweighting

FIG. 9A

FIG. 9B

1000

1001

Obtaining module

1002

Processing module

FIG. 10

1100

Execution device

Antenna

Antenna

Receiver 1101

Transmitter 1102

Processor 1103

Memory 1104

Application processor 11031

Communication processor 11032

FIG. 11

FIG. 12

Host CPU

Weight memory
1302

Input memory
1301

Operation circuit
1303

Vector computing
unit 1307

Accumulator
1308

Direct memory
access controller
1305

Unified memory
1306

Controller
1304

Instruction
fetch buffer
1309

External
memory

Bus interface unit 1310

Neural-network processing unit 1300

FIG. 13

## INTERNATIONAL SEARCH REPORT

| International application No. |
| --- |
| **PCT/CN2024/094632** |

### A. CLASSIFICATION OF SUBJECT MATTER

G06V30/146(2022.01)i

According to International Patent Classification (IPC) or to both national classification and IPC

### B. FIELDS SEARCHED

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; IEEE; 必应, Bing: 扩散模型, 文本, 生成, 图像, 加噪, 去噪, 位置, 检测框, 边框, 前景, 背景, 损失, 权重, diffusion model, text, generate, image, noise addition, de-noise, position, detection box, bounding box, foreground, background, loss, weight

### C. DOCUMENTS CONSIDERED TO BE RELEVANT

| Category* | Citation of document, with indication, where appropriate, of the relevant passages | Relevant to claim No. |
| --- | --- | --- |
| PX | CN 116665219 A (HUAWEI TECHNOLOGIES CO., LTD.) 29 August 2023 (2023-08-29) description, paragraphs 66-301 | 1-23 |
| PX | CHEN, Kai et al. "GeoDiffusion: Text-Prompted Geometric Control for Object Detection Data Generation" *https://doi.org/10.48550/arXiv.2306.04607*, 17 February 2024 (2024-02-17), pages 1-9 | 1-23 |
| Y | YANG, Zhengyuan et al. "ReCo: Region-Controlled Text-to-Image Generation" *https://doi.org/10.48550/arXiv.2211.15518*, 23 November 2022 (2022-11-23), page 1, left-hand column, paragraph 1-page 4, right-hand column, paragraph 2, and figures 1-7 | 1-23 |
| Y | CN 115222630 A (INSTITUTE OF AUTOMATION, CHINESE ACADEMY OF SCIENCES) 21 October 2022 (2022-10-21) description, paragraphs 65-119 | 1-23 |

☑ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 August 2024** | **15 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/094632**

### C. DOCUMENTS CONSIDERED TO BE RELEVANT

| Category* | Citation of document, with indication, where appropriate, of the relevant passages | Relevant to claim No. |
|---|---|---|
| Y | CN 112434753 A (SHANGHAI EYE CONTROL TECHNOLOGY CO., LTD.) 02 March 2021 (2021-03-02) description, paragraphs 54-82 | 7-10, 17-23 |
| Y | CN 116152087 A (SHENZHEN INSTITUTES OF ADVANCED TECHNOLOGY, CHINESE ACADEMY OF SCIENCES) 23 May 2023 (2023-05-23) description, paragraphs 39-91 | 1-23 |
| A | US 2021272341 A1 (ADOBE INC.) 02 September 2021 (2021-09-02) entire document | 1-23 |

Form PCT/ISA/210 (second sheet) (July 2022)

## INTERNATIONAL SEARCH REPORT
### Information on patent family members

International application No.

**PCT/CN2024/094632**

| Patent document cited in search report | | | Publication date (day/month/year) | Patent family member(s) | | | Publication date (day/month/year) |
|---|---|---|---|---|---|---|---|
| CN | 116665219 | A | 29 August 2023 | None | | | |
| CN | 115222630 | A | 21 October 2022 | None | | | |
| CN | 112434753 | A | 02 March 2021 | None | | | |
| CN | 116152087 | A | 23 May 2023 | WO | 2024120206 | A1 | 13 June 2024 |
| US | 2021272341 | A1 | 02 September 2021 | US | 11210831 | B2 | 28 December 2021 |
| | | | | US | 2022108509 | A1 | 07 April 2022 |
| | | | | US | 11783486 | B2 | 10 October 2023 |

Form PCT/ISA/210 (patent family annex) (July 2022)

**EP 4 700 722 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310612909